# EUROPEAN PATENT SPECIFICATION

(11) **EP 1 401 200 B1**
(45) Date of publication and mention of the grant of the patent: **25.10.2006**
(21) Application number: 03253568.4
(22) Date of filing: 05.06.2003
(51) Int. Cl.: H04N 5/64, G06F 1/16, G09F 9/00

(54) **Display system**
Anzeigesystem
Système d'affichage

(30) Priority: 19.09.2002 KR 2002057234
(43) Date of publication of application: 24.03.2004
(73) Proprietor: SAMSUNG ELECTRONICS CO., LTD., Suwon-si, Gyeonggi-do 442-742 (KR)
(72) Inventor: Kim, Seong-soo, Suwon city, Kyungki-do (KR); Kim, Sang-hak, Paldal-ku, Suwon city, Kyungki-do (KR)
(74) Representative: Geary, Stuart Lloyd

(56) References cited:
- EP-A- 1 054 373
- US-A- 3 259 102
- PATENT ABSTRACTS OF JAPAN vol. 2000, no. 04, 31 August 2000 (2000-08-31) -& JP 2000 003138 A (MITSUBISHI ELECTRIC CORP), 7 January 2000 (2000-01-07)
- PATENT ABSTRACTS OF JAPAN vol. 2000, no. 03, 30 March 2000 (2000-03-30) & JP 11 344934 A (SONY CORP), 14 December 1999 (1999-12-14)
- PATENT ABSTRACTS OF JAPAN vol. 2003, no. 03, 5 May 2003 (2003-05-05) & JP 2002 328626 A (FUJITSU FRONTECH LTD; MATSUSHITA ELECTRIC IND CO LTD), 15 November 2002 (2002-11-15)

## Description

The present invention relates to a display system comprising a display unit and means for mounting the display unit to a surface comprising a plurality of brackets and a plurality of projections disposed on a rear portion of the display unit for being supportively received by respective brackets. Such a display system is known from US-A-3259102.

Installation equipment for a display unit (or display main body) is generally used in mounting, onto an installation surface, a display unit having a screen. Recently, the screens of display units have been made using LCDs (liquid crystal displays), PDPs (plasma display panels), etc., allowing display units to be thin and the screens to be relatively wide. Since the display unit is thin, it can be conveniently mounted onto a surface, such as a wall.

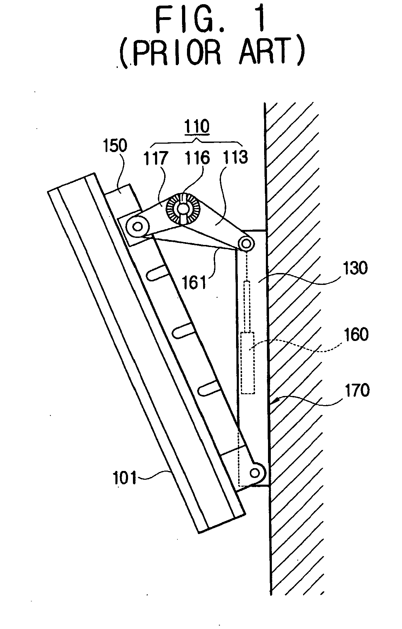

JP-A-11-344934 discloses installation equipment developed to mount an object such as a display unit on a wall 170. Referring to Figure 1, this conventional installation equipment includes a pair of arms 150 supporting a display unit 101 having a screen, a base 130 attached to a wall and rotatably attached to the arms 150 at a lower part thereof, and a link assembly (or mounting bracket) 110 provided between the arm 150 and the base 130 and rotatably connecting the arm 150 with the base 130.

The link assembly 110 includes a first link 113 having a first end rotatably attached to the base 130 at an upper part thereof, a second link 117 having a first end rotatably attached to the arm 150 and a second end rotatably attached to a second end of the first link 113, and a locking member 116 provided in the second ends of the first and second links 113, 117 and used in adjusting an angle between the first and second links 113, 117. A compression spring (not shown) is inside the locking member 116, which locks and unlocks rotation between the first and second links 113 and 117 by using the elastic force of the compression spring. The angle between the first and second links 113 and 117 is selected from seven predetermined angles by the locking member 116. The base 130 is provided with a damping part. The damping part includes a gas strut (or gas damper) 160 attached to the base 130, and a wire 161 having a first end coupled to an upper end of the gas strut 160 and a second end coupled to a shaft (not shown) connecting the two arms 150. Hence, when the locking member 116 is released, the damping part prevents the display unit 101 from tilting forward suddenly due to its own weight.

As described above, the conventional installation equipment comprises the arm 150 and the base 130, which are placed between the display unit 101 and the wall, and the link assembly 110, which is placed between the arm 150 and the base 130, to permit an object such as the display unit 101 to be tilted about a predetermined axis. Furthermore, the link assembly 110 includes the locking member 116, so that the tilt of the object can be locked at a predetermined angle and unlocked. Moreover, the base 130 includes the damping part having the gas strut 160 and the wire 161, so that when the locking member 116 is released, the damping part can prevent the object from tilting forward suddenly due to its own weight. Thus, a user can adjust the tilt of the object by pushing or pulling the object.

However, the conventional installation equipment is not only complicated because it has the gas strut 160 and wire 161, the locking member 116, etc., but such installation equipment is also inconvenient because, when the user wishes to tilt the object, the object can be pushed and pulled only when the locking member 116 is released. Further, in the conventional installation equipment, it is impossible to adjust the tilt of the object finely because the locking member can only lock the tilt of the object at a discrete number of angles. Furthermore, the conventional installation equipment is not compatible with display units of various sizes because the sizes of the arms and the base depend on the size of the display unit.

A display system, according to the present invention, is characterised in that each of said brackets include a keyhole slot to receive a respective projection and wherein at least one of said brackets includes a folding arm coupling the or each brackets keyhole slot to a wall attachment part suitable for fixing the bracket to a surface.

Preferably, an H-shaped jig for mounting a display system is provided, the jig comprising coupling means provided at the free ends of its arms, for releasably coupling to keyhole slot brackets, the arms being foldable from an operative position to a storage configuration, in which they lie parallel to the cross-piece of the jig. More preferably, the coupling means comprises a plurality of magnetic projections. Still more preferably, the H-shaped jig comprises locking means for locking the foldable arms in a desired position.

Thus, the means for mounting the display unit to a surface and the jig have a simple structure and are convenient for mounting the display unit onto a wall.

Embodiments of the present invention will now be described, by way of example, with reference to Figures 2 to 11 of the accompanying drawings, in which:
Figure 1 is a side view of conventional installation equipment for a display unit;
Figure 2 is a side view of a first embodiment of installation equipment for a display unit;
Figures 3 and 4 are perspective views of the installation equipment of Figure 2, being mounted to a wall;
Figure 5 is an exploded perspective view of the installation equipment of Figure 2;
Figure 6 is a side view illustrating a folded state of the installation equipment of Figure 2;
Figure 7 is a side view illustrating an unfolded state of the installation equipment of Figure 2;
Figure 8 is a perspective view of a second embodiment of installation equipment for a display unit;
Figure 9 is a perspective view of an embodiment of a jig for the installation equipment;
Figure 10 is an exploded perspective view of the jig of Figure 9; and
Figure 11 is a perspective view illustrating the jig of Figure 9 and the installation equipment of Figure 2 just before they are combined.

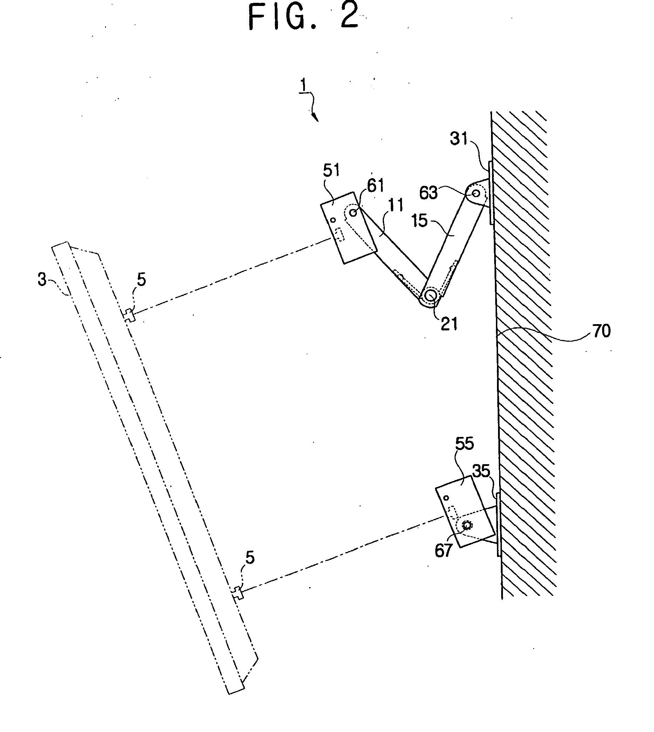

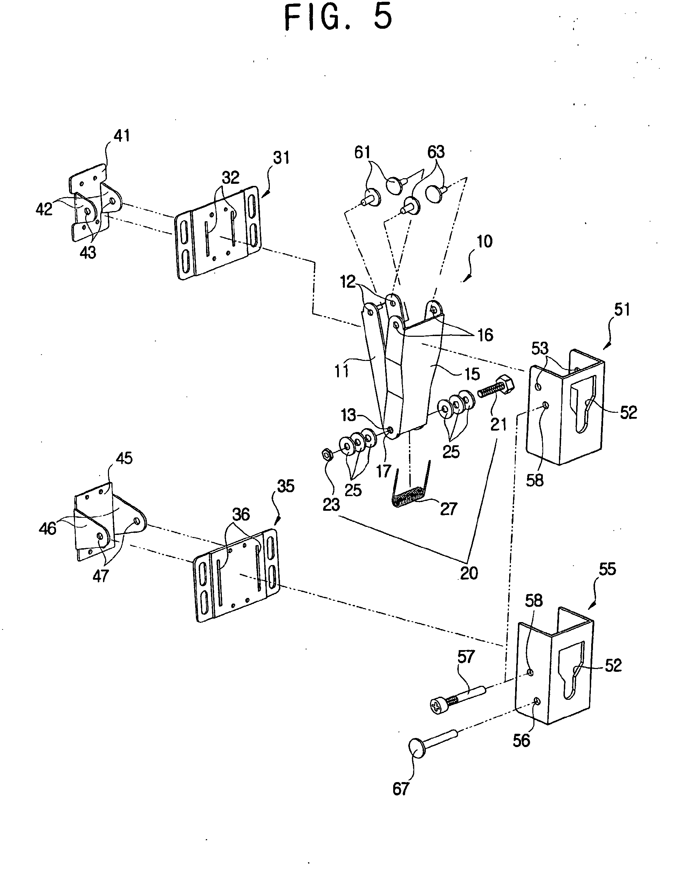

Referring to Figures 2 to 5, a first embodiment of installation equipment 1 for a display unit is used for tiltably mounting a display unit 3 having a screen onto an installation surface such as a wall 70. The installation equipment 1 includes upper and lower keyhole slot brackets (or main brackets) 51, 55 having a C-shaped cross-section and supporting a display unit 3, upper and lower supporting plates (or brackets) 31, 35 supporting the upper and lower keyhole slot brackets 51, 55 and attached to the wall 70, and an arm (or link assembly) 10 provided between the upper keyhole slot bracket 51 and the upper supporting plate 31. It should be noted that, although only two sets of brackets are shown in the Figures, any desired number of brackets may be used (e.g. one set, three sets, etc.)

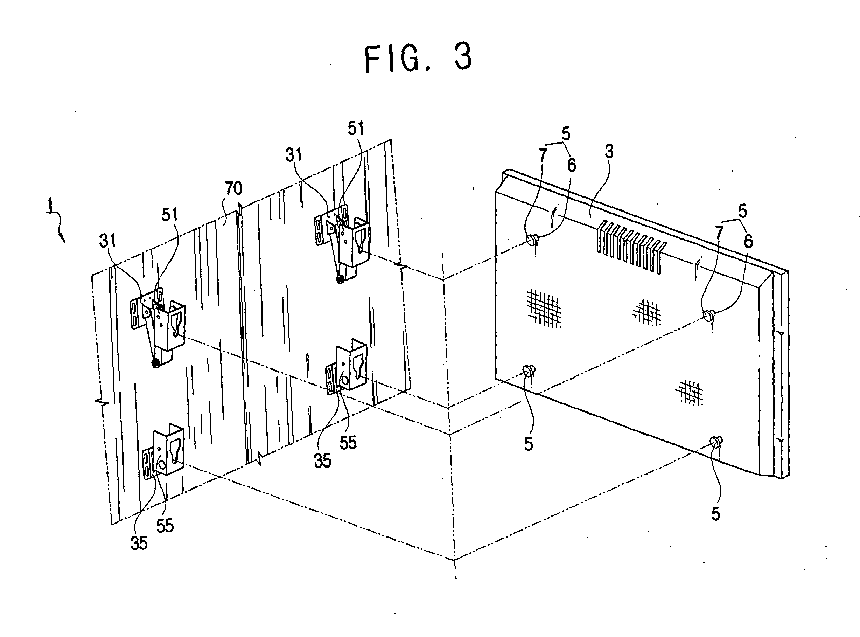

Referring to Figure 3, the installation equipment 1 is attached onto the wall 70 using a set of brackets, coupled to the display unit 3 symmetrically. The left bracket will be representatively described below. The display unit 3 has a screen,made of an LCD, a PDP, etc. in the front thereof, and includes a plurality of projections 5 to be coupled to keyhole slots (or projection holding parts) 52 of the upper and lower keyhole slot brackets 51, 55 (to be described later) in the back thereof. It is preferable that the number of projections 5 is equal to the number of projection receiving apertures 52 provided in the upper and lower keyhole slot brackets 51, 55. However, where desired, the number of projections 5 may be smaller or larger than the number of projection receiving apertures 52. The projection 5 includes a neck part (or shank part) 6 protruding from the back of the display unit 3 and a head part 7 formed on the end of the neck part 6 and having a larger diameter than the neck part 6.

The upper keyhole slot bracket 51 is formed with a pair of second pin receiving (or combining) holes 53 to be aligned with second pin through holes 16 of a second link 15 (to be described later). The upper keyhole slot bracket 51 has a larger width than the second link 15 in order to accommodate the second link 15 in the upper keyhole slot bracket 51. The lower keyhole slot bracket 55 has the same shape as the upper keyhole slot bracket 51 and is formed with a pair of third pin receiving (or combining) holes 56 for rotatably attaching the lower keyhole slot bracket 55 to a lower wall bracket (or second link bracket) 45 (to be described later). Further, the upper and lower keyhole slot brackets 51, 55 are formed with the keyhole slots 52 in correspondence with the projections 5 provided in the back of the display unit 3, respectively.

The keyhole slot 52 includes an upper part larger than the head part 7 of the projection 5 and a lower part smaller than the head part 7 and larger than the neck part 6 of the projection 5. Therefore, the head part 7 of the projection 5 provided in the back of the display unit 3 is first inserted into the upper part of the keyhole slot 52. Then, the head part 7 is latched to the lower part of the keyhole slot 52 by moving the head part 7 downward. Thus, the display unit 3 is conveniently attached to the upper and lower keyhole slot brackets 51, 55. Further, each of the upper and lower keyhole slot brackets 51, 55 includes a safety bolt 57 to prevent the display unit 3 from coming away from the upper and lower keyhole slot brackets 51, 55 due to an external force. The safety bolt 57 is attached to a safety bolt hole 58. Therefore, after latching the projections 5 of the display unit 3 to the upper and lower keyhole slot brackets 51, 55, the safety bolts 57 are inserted into the safety bolt holes 58 across the projections 5, respectively, to prevent each projection 5 from coming away from the keyhole slot 52.

The upper and lower supporting plates 31, 35 are shaped like plates, and are attached to the wall 70. The upper supporting plate 31 is formed with a pair of first slits 32, and an upper wall attachment part (or first link bracket) 41 passes through the first slits 32 and is rotatably coupled to first pin through holes 12 of a first link 11 (to be described later). The lower supporting plate 35 is formed with a pair of second slits 36, corresponding to the first slits 32 of the upper supporting plates 31, and a lower wall attachment part (or second link bracket) 45 passes through the pair of second slits 36 and is rotatably coupled to the third pin receiving holes 56 of the lower keyhole slot bracket 55. The upper wall attachment part 41 comprises a plate, is disposed between the wall 70 and the upper supporting plate 31, and has a pair of first flanges (or brackets) 42 perpendicular to the plate and passing through the first slits 32 of the upper supporting plate 31. At an end part of each first flange 42 a first pin receiving hole 43 is formed to be rotatably coupled to the first pin through hole 12 of the first link 11. The lower wall attachment part 45 comprises a plate, is disposed between the wall 70 and the lower supporting plate 35 in correspondence with the position of the upper wall attachment part 41, and has a pair of second flanges (or brackets) 46 perpendicular to the plate and passing through the second slits 36 of the lower supporting plate 35. At an end part of each second flange 42 a third pin through hole 47 is formed to be rotatably coupled to the third pin combining hole 56 of the lower keyhole slot bracket 55.

The arm 10 includes the first and second links 11, 15 placed behind an upper part of the display unit 3 and linking the display unit 3 with the upper wall attachment part 41 attached onto the wall 70, a torsion spring 27 disposed between the first and second links 11, 15 and elastically biasing the display unit 3 toward the wall 70, and a friction assembly (or friction part) 20 provided in a joint area between the first and second links 11, 15 and resisting rotation between the first and second links 11, 15. In this embodiment, the resisting force caused by the friction assembly 20 is stronger than the elastic force of the torsion spring 27. The first link 11 has a C-shaped cross section and has a first end formed with the pair of first pin through holes 12 rotatably coupled to the first pin receiving holes 43 of the upper wall attachment part 41 by a pair of first hinge pins 61. The first link 11 has a second end formed with a pair of first bolt holes 13 rotatably coupled to the second link 15. The second link 15 has a C-shaped cross section like the first link 11 and has a first end formed with the pair of second pin through holes 16 rotatably coupled to the second pin receiving holes 53 of the upper keyhole slot bracket 51 by a pair of second hinge pins 63. The second link 15 includes a second end formed with a pair of second bolt holes 17 rotatably coupled to the first bolt hole 13 of the first link 11. The width of the second link 15 is larger than the width of the first link 11, so that the second link 15 can accommodate the first link 11 by rotation.

The torsion spring 27 is inserted onto a bolt 21 of the friction assembly 20 and has a first end coupled to the first link 11 and a second end coupled to the second link 15. Furthermore, the torsion spring 27 produces an elastic force that opposes opening the first and second links 11, 15. Hence, the torsion spring 27 elastically biases the display unit 3 toward the wall 70. In one embodiment, the elastic force of the torsion spring 27 is substantially equal to the torque generated when the display unit 3 is tilted about the third hinge pin 67 by the display unit's weight, thus minimizing the net torque applied to the display unit 3. The friction assembly 20 includes the bolt 21 passing through the first bolt hole 13 of the first link 11, the second bolt hole 17 of the second link 15, and the torsion spring 27, a nut 23 fitting to the bolt 21, and a plurality of washers 25 disposed between the bolt 21 and the nut 23. The friction assembly 20 is formed by the combination of the bolt 21 and the nut 23 and produces a resisting force that opposes rotation between the first and the second links 11, 15. In this embodiment, the resisting force produced by the friction assembly 20 is stronger than the elastic force of the torsion spring 27.

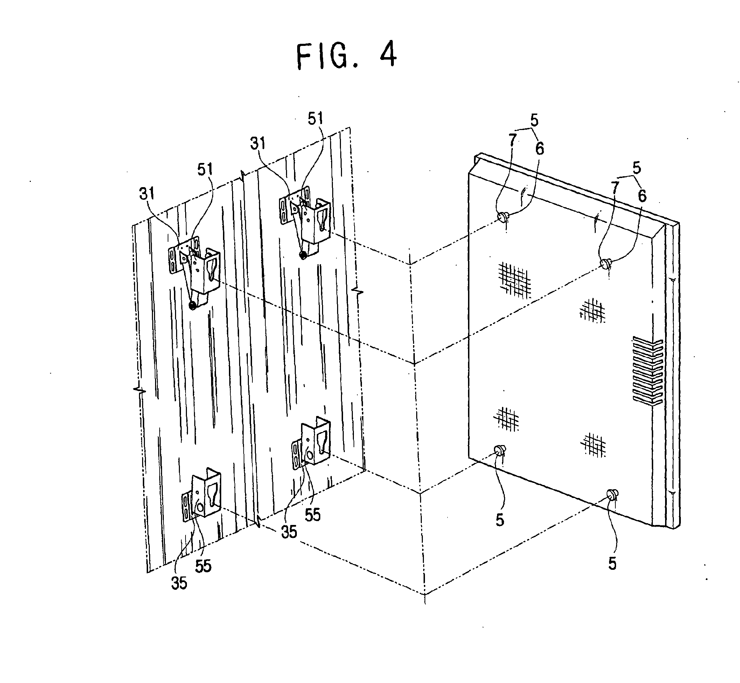

Thus, when the display unit 3 is separated from the upper and lower keyhole slot brackets 51, 55, the tilt of the upper keyhole slot bracket 51 relative to the upper supporting plate 31 remains unchanged because the resisting force of the friction assembly 20 is stronger than the elastic force of the torsion spring 27. Furthermore, the plurality of washers 25 disposed between the bolt 21 and the nut 23 prevent the nut 23 from loosening on the bolt 21. The first embodiment of the installation equipment 1 allows the display unit 3 to be mounted on the wall 70 lengthwise as shown in Figure 4. In addition, the first embodiment of the installation equipment 1 may allow the display unit 3 to be mounted on the wall 70 obliquely as desired.

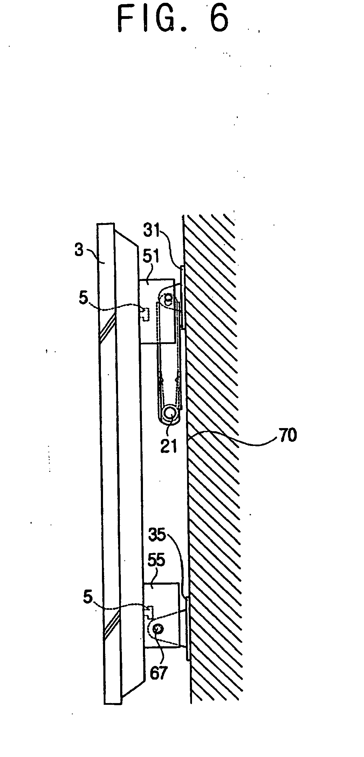

The first embodiment of the installation equipment 1 is operated as follows. Referring to Figure 6, the installation equipment 1 can be completely folded when a user tilts the display unit 3 about the third hinge pin 67 by pushing the display unit 3 towards the wall 70. At this time, a user can easily tilt the display unit 3 relative to the wall 70 because the torsion spring 27 elastically biases the display unit 3 towards the wall 70. Further, as the second link 15 rotates about the friction assembly 20, the first link 11 is accommodated in the second link 15, and simultaneously the second link 15 is accommodated in the upper keyhole slot bracket 51, so that the upper keyhole slot bracket 51 is close to the upper supporting plate 31. The installation equipment 1 remains folded due to the resisting force of the friction assembly 20.

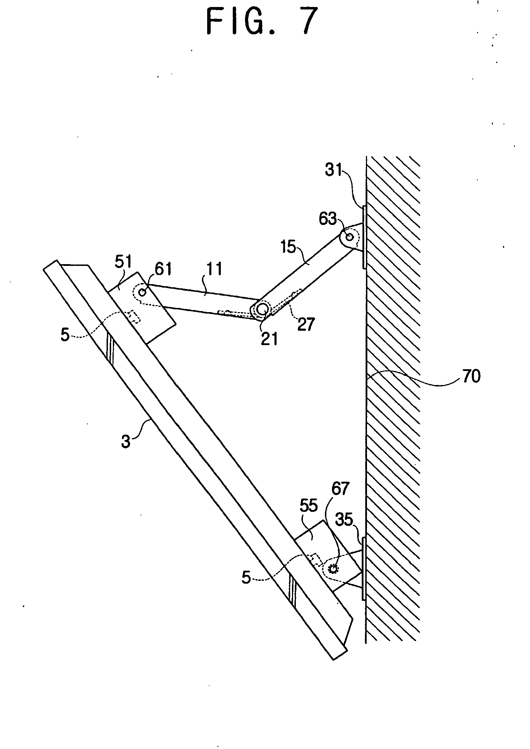

Referring to Figure 7, the installation equipment 1 can be unfolded when, a user tilts the display unit 3 about at least one third hinge pin 67 by pulling the display unit 3. At this time, the display unit 3 is prevented from tilting forward suddenly because of at least one torsion spring 27 elastically biasing the display unit 3 toward the wall 70. Further, the installation equipment 1 remains unfolded due to the resisting force of the friction assembly 20. Additionally, in one embodiment, a stopper (not shown) is provided in at least one of the first and second links 11, 15 to restrict the tiltable angle of display unit 3, wherein the stopper is placed between the upper keyhole slot bracket 51 and the upper supporting plate 31, and the lower keyhole slot bracket 55 and the lower supporting plate 35.

In the first embodiment, the arm 10 is rotatably coupled to the wall 70 via the upper wall attachment part 41. However, where desired, the arm 10 may be rotatably coupled to the wall 70 directly. Similarly, in the first embodiment, the arm 10 is attached to the display unit 3 via the upper keyhole slot bracket 51, but, where desired, the arm 10 may be attached to the display unit 3 directly.

In the first embodiment, the friction assembly 20 is provided between the first and second links 11, 15. However, a friction assembly may be provided between the upper wall attachment part 41 and the first link 11 or between the upper keyhole slot bracket 51 and the second link 15. In the first embodiment, the torsion spring 27 is disposed between the first and second links 11, 15. However, a spring member such as a flat spring, a coil spring, etc. may be provided in at least one joint area related to the first and second links 11, 15, i.e. between the upper supporting plate 31 and the first link 11 or between the upper keyhole slot bracket 51 and the second link 15.

In an embodiment described above, the installation equipment 1 is symmetrically latched to the display unit 3 using a pair of brackets. However, the installation equipment 1 may be latched to a display unit 3 using any desired number of brackets. In one of the embodiments described above, the safety bolt 57 and the safety bolt hole 58 are used for preventing the display unit 3 from coming away from the upper and lower keyhole slot brackets 51, 55. In another embodiment, however, a safety pin having no thread and a safety pin hole may be employed as the safety bolt 57 and the safety bolt hole 58, respectively. As described above, in the first embodiment of installation equipment 1 according to the present invention, the display unit 3 includes the first and second links 11, 15, the spring member, and the friction assembly 20 provided between the display unit 3 and the wall 70. Therefore, the installation equipment 1 has a simple structure and allows a user to tilt the display unit 3 easily. Furthermore, the installation equipment 1 is designed to require the same force to tilt the display unit 3 either forward or backward, so that it is convenient for a user to finely adjust the tilt of the display unit 3.

Furthermore, the first embodiment of installation equipment 1 according to the present invention includes the upper supporting plate 31, the lower supporting plate 35, the upper keyhole slot bracket 51 and the lower keyhole slot bracket 55, which are independent of one another. Therefore, the installation equipment 1 is not only compatible with various sizes of display unit , but also allows a display unit to be mounted onto a wall at various rotated angles.

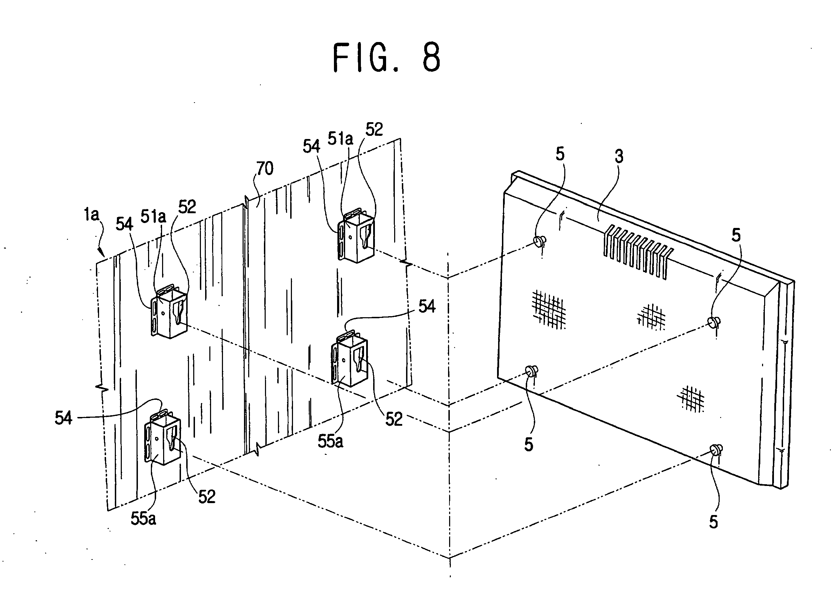

Referring to Figure 8, a second embodiment of installation equipment 1a includes upper and lower keyhole slot brackets 51a, 55a which, unlike in the first embodiment, are directly attached to the wall 70. The display unit 3 includes the plurality of projections 5 each having the neck part 6 and the head part 7. Each of the upper and lower keyhole slot brackets 51a, 55a includes a flange part 54 parallel with the wall 70 and a keyhole slot 52 to which the projection 5 of the display unit 3 is latched. Therefore, the second embodiment of installation equipment 1 a according to the present invention is not only compatible with various sizes of display unit, but also allows a display unit to be mounted onto a wall at various rotated angles. Furthermore, the second embodiment of the installation equipment 1a is simpler than the first embodiment of the installation equipment 1, providing more convenience in mounting a display unit onto an installation surface, such as a wall.

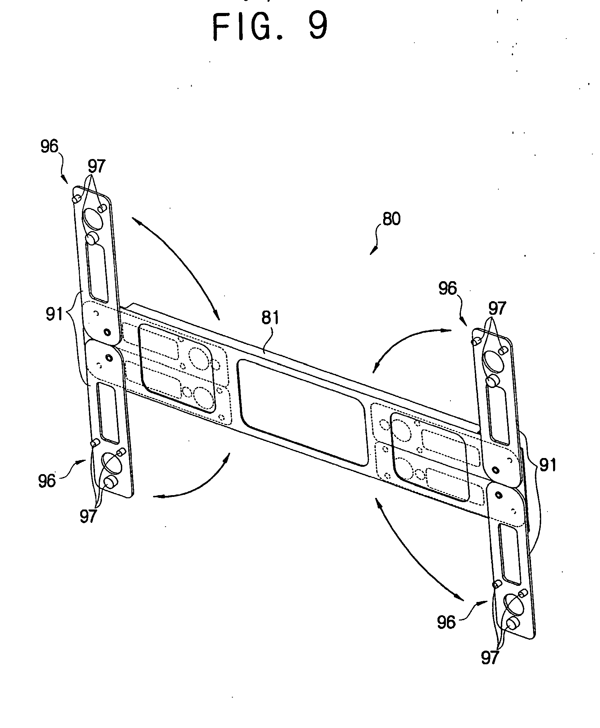

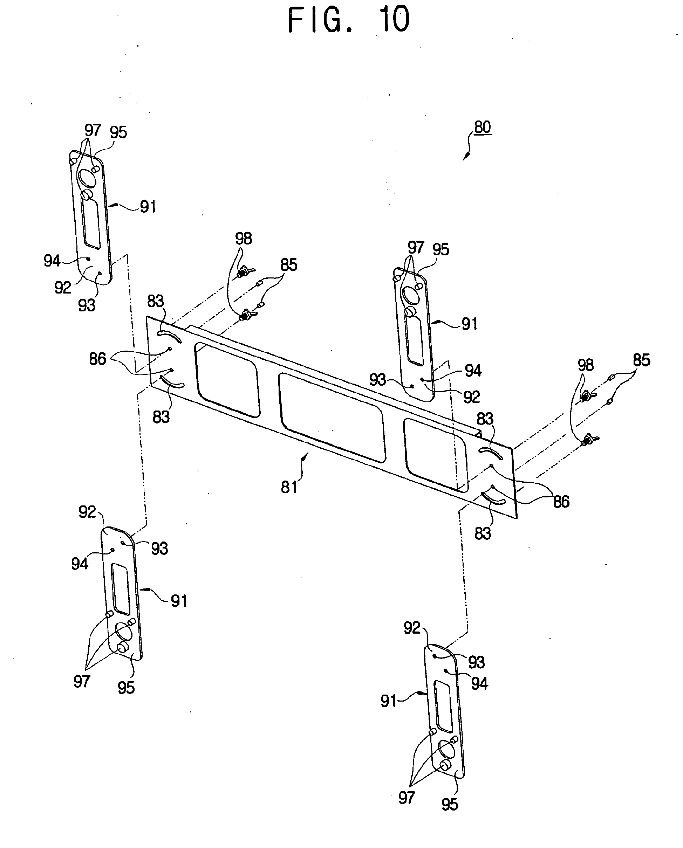

Figures 9 to 11 illustrate a jig for installing one embodiment of installation equipment according to the present invention. Referring to Figures 9 to 11, a jig 80 comprises a jig frame 81 shaped like a plate, supporting arms 91 provided in pairs at opposite end parts of the jig frame 81. The jig frame 81 includes first hinge holes 86 positioned at the opposite end parts thereof and to which hinge pins 85 are inserted for rotatably supporting the supporting arms 91, and has slots 83 for guiding the paths of wing bolts 98 (to be described later). The first hinge hole 86 corresponds to a second hinge hole 93 formed on the supporting arm 91, and a hinge pin 85 is inserted in the first and second hinge holes 86, 93 and hammered at the opposite ends thereof, thereby rotatably combining the supporting arm 91 to the jig frame 81. Therefore, the supporting arm 91 is rotatable relative to the jig frame 81 about the hinge pin 85.

The slot 83 is formed by cutting out part of the jig frame 81 at a predetermined distance from the first hinge hole 86. The slot 83 is shaped like an arc that has a central angle of 90°, thereby guiding and limiting the movement of the wing bolt 98. Therefore, as shown in Figure 9, the supporting arm 91 is rotatable by an angle of 90° relative to the jig frame 81, so that the supporting arm 91 can be folded up into the jig frame 81 and unfolded perpendicular to a longitudinal direction of the jig frame 81. The supporting arm 91 includes a first part 92 attached to the jig frame 81 and a second part 95 for releasably coupling to the first embodiment of the installation equipment 1. The first part 92 of the supporting arm 91 is formed with the second hinge hole 93 corresponding to the first hinge hole 86 of the jig frame 81, and a guide projection is inserted in the slot 83 of the jig frame 81.

In the present embodiment, a wing screw 98 is employed as the guide projection, so that the first part 92 is formed with a screw hole 94 into which the wing screw 98 is inserted, through the slot 83. Therefore, a user can easily lock the supporting arm 91 by tightening the wing screw 98 when the supporting arm 91 is rotated at a predetermined angle relative to the jig frame 81. The wing screw 98 is preferably employed as the guide projection, but a projection protruding from the surface of the supporting arm, and/or other kinds of screws, etc. may also be employed as the guide projection. The second part 95 of the supporting arm 91 is provided with a coupling projection part (or combining projection part) 96 protruding in correspondence to the keyhole slot 52 formed in the upper and lower keyhole slot brackets 51, 55 of the installation equipment 1 according to the first embodiment.

The coupling projection part 96 includes three magnetic projections 97, two being inserted in the upper part of the keyhole slot 52, and one being inserted in the lower part of the keyhole slot 52. The coupling projection part 96 attracts the upper and lower keyhole slot brackets 51 and 55 when the upper and lower keyhole slot brackets 51, 55 are made of magnetic metal. Further, when the four supporting arms 91 are unfolded perpendicular to the longitudinal direction of the jig frame 81, the coupling projection parts 96 may be positioned in correspondence to the projections 5 of the display unit 3, respectively, and the jig for the installation equipment is operated as follows. Referring to Figure 9, the supporting arms 91 are provided as a pair at opposite end parts of the jig frame 81, so that the supporting arms 91 can be folded up into the jig frame 81 and unfolded perpendicular to the longitudinal direction of the jig frame 81. Thus, the jig 80 is convenient to carry because it is foldable.

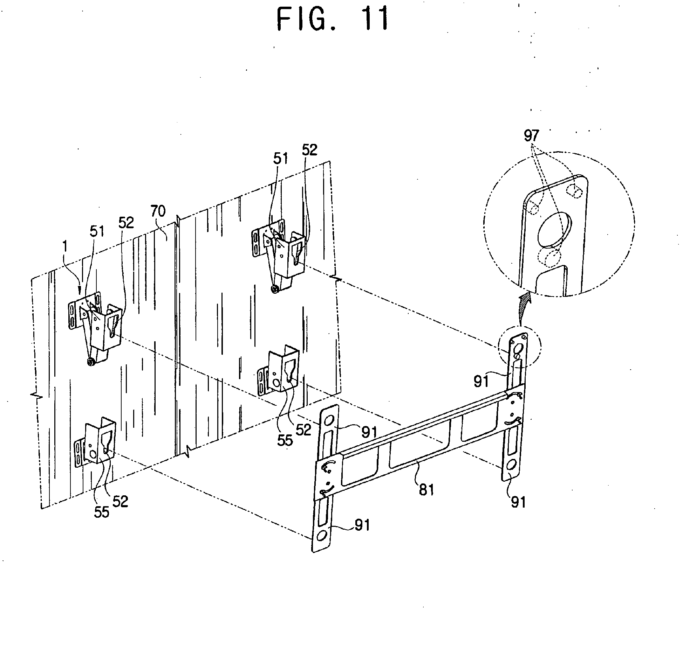

As shown in Figure 11, when the supporting arms 91 are unfolded perpendicular to the longitudinal direction of the jig frame 81, the upper and lower keyhole slot brackets 51, 55 of the installation equipment 1 are inserted onto the coupling projection parts 96 of the supporting arms 91 and then magnetically attached to the coupling projection part 96 by the magnetic projections 97. At this time, the keyhole slots 52 can easily be detached from the coupling projection part 96 with a force sufficient to overcome the magnetic force. Thereafter, the installation equipment 1 magnetically attached to the coupling projection parts 96 of the jig 80 is fastened to the wall 70 with screws, etc. Consequently, a user can easily install the installation equipment 1 onto the wall 70 without setting up the position of each portion of the installation equipment 1. Thus, the display unit 3 is mounted to the installation equipment 1 after detaching the jig 80 from the installation equipment 1. In the above description, the jig 80 is applied to the first embodiment of the installation equipment 1, but it can also be applied to the second embodiment of the installation equipment 1a.

In the foregoing embodiment, the supporting arms 91 form two pairs. However, the number of the supporting arms varies in correspondence with the number of the upper and lower keyhole slot brackets of the installation equipment. In' the foregoing embodiment, the slot 83 is formed on the jig frame 81, and the guide projection is guided by the slot 83 that is provided in the supporting arm 91. Alternatively, the slot may be provided in the supporting arm and the guide projection may be provided in the jig frame, 81. In the foregoing embodiment, the second part 95 of the supporting arm 91 is provided with the coupling projection part 96 that has three magnetic projections 97 in order to detachably combine the second parts 95 of the supporting arms 91 with the keyhole slots 52 of the upper and lower keyhole slot brackets 51, 55. In alternate embodiments, the second parts of the supporting arms may be releasably coupled to the keyhole slots 52 of the upper and lower keyhole slot brackets 51, 55 by means of a bolt, a locking unit, etc.

As described above, a jig for installation equipment has a jig frame, a supporting arm rotatably attached to the jig frame, and a coupling projection part provided in the supporting arm and releasably coupled to upper and lower keyhole slot brackets of the installation equipment, thereby allowing a user to attach the installation equipment to a wall easily. As described above, installation equipment for a display unit and a jig for the installation equipment are provided, wherein the installation equipment and the jig have a simple structure and are convenient for mounting the display unit onto a wall. Furthermore, installation equipment for a display unit and a jig for the installation equipment are provided, which allow a display unit to be tilted easily and adjusted finely, to be mounted onto a wall at various rotated angles, and to be compatible with display unit of various sizes.

## Claims

1. A display system comprising a display unit (3) and means for mounting the display unit to a surface (70) comprising a plurality of brackets (51,55) and a plurality of projections (5) disposed on a rear portion of the display unit (3) for being supportively received by respective brackets (51,55) **characterised in that** each of said brackets include a keyhole slot to receive a respective projection and wherein at least one of said brackets (51,55) includes a folding arm (10) coupling the or each brackets keyhole slot (52) to a wall attachment part (41,45) suitable for fixing the bracket (51,55) to a surface (70).

2. A display system according to claim 1, wherein at least one keyhole slot bracket (51,55) is pivotally coupled to the wall attachment part (41,45).

3. A display system according to claim 1 or claim 2 wherein at least one keyhole slot bracket (51,55) is pivotally coupled to the folding arm (10).

4. A display system according to any preceding claim wherein the folding arm (10) includes a first link (11) having a first end rotatably attached to the wall attachment part (41,45), a second link (15) having a first end rotatably attached to the bracket (51,55), a second end of the second link (15) being rotatably attached to a second end of the first link (11) and a spring member (27) provided between the first and second ends of the links (11,15) in a region of their pivotal attachment to elastically bias the display unit toward the surface.

5. A display system according to claim 4 wherein the folding arm (10) includes a friction part (20) associated with the spring member (27) in the region of attachment between the first and second links (11,15) to resist rotation between the first and second links (11,15).

6. A display system according to claim 5 wherein the friction part (20) is configured so that the resisting force is stronger than an elastic force of the spring member (27).

7. A display system according to claim 6 wherein the spring member (27) includes a torsion spring having a first end coupled to the first link (11) and a second end coupled to the second link (15).

8. A display system according to claim 7 wherein the friction part (20) includes a bolt (21) passing through the torsion spring (27) in the region between the pivotal connection of the first and second links (11,15), a nut (23) matching with the bolt (21) and at least one washer (25) interposed between the bolt (21) and the nut (23).

9. A display system according to any preceding claim wherein the projections (5) disposed on a rear portion of the display each include a shank part (6) protruding from the back of the display main body and a head part (7) formed on an end of the shank part (6) and having a larger diameter than the shank part (6).

10. A display system according to any preceding claim wherein the keyhole slot brackets (51,55) each further include a safety bolt (57) to prevent the display main body from breaking away from the keyhole slot brackets (51,55) due to an external force and a safety bolt hole (8) to which the safety bolt (57) is attached.

11. An H-shaped jig for mounting a display system according to any preceding claim, the jig (80) comprising coupling means (96) provided at the free ends (95) of its arms (91), for releasably coupling to keyhole slot brackets (51,55), the arms (91) being foldable from an operative position to a storage configuration, in which they lie parallel to the cross-piece (81) of the jig (80).

12. An H-shaped jig according to claim 11 wherein the coupling means (96) comprises a plurality of magnetic projections (97).

13. An H-shaped jig according to claims 11 or 12 comprising locking means (98) for locking the foldable arms (91) in a desired position.

14. An H-shaped jig according to any of claims 11 to 13 wherein one of the arms (91) and the jig frame (81) is formed with a first arc-shaped slot (83) to guide rotation of the arm (91) relative to the jig frame (81) within a predetermined angle and the other one of the arms (91) and the jig frame (81) being formed with a guide projection (93) that locates in the slot (83).

15. A method of mounting a display system to a surface comprising attaching at least one keyhole slot bracket (51,55) to a folding arm (10), coupling the folding arm (10) to a wall attachment part suitable for fixing the folding arm (10) and the bracket (51,55) to the surface and attaching the display to the keyhole slot brackets (51,55) by inserting projections (5) disposed on a rear portion of the display unit into respective keyhole slots in the keyhole slot brackets (51,55).

## Patentansprüche

1. Anzeigeanordnung, umfassend eine Anzeigeeinheit (3) und Mittel zum Befestigen der Anzeigeeinheit an einer Fläche (70), die eine Vielzahl von Halterungen (51, 55) und eine Vielzahl von vorstehenden Teilen (5), die auf einem hinteren Teil der Anzeigeeinheit (3) angeordnet sind, um durch jeweilige Halterungen (51, 55) gestützt aufgenommen zu werden, umfassen, **dadurch gekennzeichnet, dass** jede der Halterungen einen Schlüssellochschlitz enthält, um ein entsprechendes vorstehendes Teil aufzunehmen, und wobei wenigstens eine der Halterungen (51, 55) einen Faltarm (10) enthält, der den Schlüssellochschlitz (52) einer Halterung oder den jeder der Halterungen mit einem Wandbefestigungsteil (41, 45), das geeignet ist, um die Halterung (51, 55) an einer Fläche (70) zu halten, kuppelt.

2. Anzeigeanordnung nach Anspruch 1, wobei wenigstens eine Schlüssellochschlitzhalterung (51, 55) drehbar mit dem Wandbefestigungsteil (41, 45) gekuppelt ist.

3. Anzeigeanordnung nach Anspruch 1 oder 2, wobei wenigstens eine Schlüssellochschlitzhalterung (51,55) drehbar mit dem Faltarm (10) gekuppelt ist.

4. Anzeigeanordnung nach einem der vorhergehenden Ansprüche, wobei der Faltarm (10) ein erstes Verbindungsglied (11), das mit einem ersten Ende drehbar an dem Wandbefestigungsteil (41, 45) befestigt ist, ein zweites Verbindungsglied (15), das mit einem ersten Ende drehbar an der Halterung (51, 55) befestigt ist, wobei ein zweites Ende des zweiten Verbindungsgliedes (15) drehbar an dem zweiten Ende des ersten Verbindungsgliedes (11) befestigt ist, und ein Federelement (27), das zwischen den ersten und den zweiten Enden der Verbindungsglieder (11, 15) in einem Bereich, in dem diese drehbar aneinander befestigt sind, bereitgestellt ist, um die Anzeige in Richtung auf die Fläche federnd vorzuspannen, enthält.

5. Anzeigeanordnung nach Anspruch 4, wobei der Faltarm (10) ein Reibungsteil (20) enthält, das mit dem Federelement (27) in dem Bereich, in dem das erste und das zweite Verbindungsglied (11, 15) aneinander befestigt sind, in Verbindung steht, um Widerstand gegen Drehen zwischen dem ersten und dem zweiten Verbindungsglied (11, 15) zu leisten.

6. Anzeigeanordnung nach Anspruch 5, wobei das Reibungsteil (20) so ausgelegt ist, dass die Widerstandskraft größer als eine Federkraft des Federelementes (27) ist.

7. Anzeigeanordnung nach Anspruch 6, wobei das Federelement (27) eine Drehfeder mit einem ersten Ende, das mit dem ersten Verbindungsglied (11) gekuppelt ist, und mit einem zweiten Ende, das mit dem zweiten Verbindungsglied (15) gekuppelt ist, enthält.

8. Anzeigeanordnung nach Anspruch 7, wobei das Reibungsteil (20) einen Bolzen (21), der in dem Bereich, im dem das erste und das zweite Verbindungsglied (11, 15) drehbar verbunden sind, durch die Drehfeder (27) geht, eine auf den Bolzen passende Mutter (23) und wenigstens eine Unterlegscheibe (25), die zwischen dem Bolzen (21) und der Mutter (23) eingefügt ist, enthält.

9. Anzeigeanordnung nach einem der vorhergehenden Ansprüche, wobei die vorstehenden Teile (5), die auf einem hinteren Teil der Anzeige angeordnet sind, jedes einen Schaftteil (6), der von der Rückseite des Anzeigehauptkörpers absteht, und einen auf einem Ende des Schaftteils (6) ausgebildeten Kopfteil (7), der einen größeren Durchmesser als der Schaftteil (6) hat, enthalten.

10. Anzeigeanordnung nach einem der vorhergehenden Ansprüche, wobei die Schlüssellochschlitzhalterungen (51, 55) jede des Weiteren einen Sicherungsbolzen (57) enthalten, um zu verhindern, dass der Anzeigehauptkörper von den Schlüssellochsehlitzhalterungen (51, 55) auf Grund einer äußeren Kraft abreißt, und ein Sicherungsbolzenloch (8), in dem der Sicherungsbolzen (57) befestigt wird, enthalten.

11. H-förmige Vorrichtung zum Befestigen einer Anzeigeanordnung nach einem der vorhergehenden Ansprüche, wobei die Vorrichtung (80) umfasst: Kupptungseinrichtungen (96), die auf den freien Enden (95) ihrer Arme (91) zum lösbaren Kuppeln mit den Schlüssellochschlitzhalterungen (51, 55) bereitgestellt sind, wobei die Arme von einer Betriebsfunktion in eine Lagerungsanordnung, in der sie parallel zu dem Querstück (81) der Vorrichtung (80) liegen, gefaltet werden können.

12. H-förmige Vorrichtung nach Anspruch 11, wobei die Kupplungseinrichtungen (96) eine Vielzahl von magnetischen, vorstehenden Teilen (97) umfassen.

13. H-förmige Vorrichtung nach Anspruch 11 oder 12, die Arretiereinrichtungen (98) zum Arretieren des faltbaren Arms (91) in einer Soli-Position umfasst.

14. H-förmige Vorrichtung nach einem der Ansprüche 11 bis 13, wobei einer der Arme (91) und der Rahmen (81) der Vorrichtung mit einem ersten bogenförmigen Schlitz (83) ausgebildet sind, der zum Führen von Drehung des Arms (91) relativ zu dem Vorrichtungsrahmen (81) innerhalb eines vorgegebenen Winkels dient, und das andere Ende des Arms (91) und des Rahmens (81) der Vorrichtung mit einem vorstehenden Führungsteil (93), der in dem Schlitz (83) befindlich ist, ausgebildet ist.

15. Verfahren zum Anbauen einer Anzeigeanordnung an eine Fläche, das Verfahren umfasst das Befestigen wenigstens einer Schlüssellochschlitzhalterung (51, 55) an einem Faltarm (10), das Kuppeln des Faltarms (10) an ein Wandbefestigungsteil, das zum Halten des Faltarms (10) und der Halterungen (51, 55) an einer Fläche geeignet ist, und das Befestigen der Anzeige an den Schlüssellochschlitzhalterungen (51, 55) durch das Einführen der vorstehenden Teile (5), die auf einem hinteren Teil der Anzeigeanordnung angeordnet sind, in die entsprechenden Schlüssellochschlitze in den Schlüssellochschlitzhalterungen (51, 55).

## Revendications

1. Système d'affichage comprenant une unité d'affichage (3) et des moyens pour monter l'unité d'affichage sur une surface (70) comprenant une pluralité de supports (51, 55) et une pluralité de saillies (5) disposés sur une partie arrière de l'unité d'affichage (3) pour être reçues en étant supportées par les supports (51, 55) respectifs, **caractérisé en ce que** chacun desdits supports comprend une encoche en trou de serrure pour recevoir une saillie respective et dans lequel au moins l'un desdits supports (51, 55) comprend un bras pliant (10) couplant la ou chacune des encoches en trou de serrure (52) de supports sur une partie de fixation de paroi (41, 45) appropriée pour fixer le support (51, 55) sur une surface (70).

2. Système d'affichage selon la revendication 1, dans lequel au moins un support (51, 55) d'encoche en trou de serrure est couplé de manière pivotante à la partie de fixation de paroi (41, 45).

3. Système d'affichage selon la revendication 1 ou la revendication 2, dans lequel au moins un support d'encoche en trou de serrure (51, 55) est couplé de manière pivotante au bras pliant (10).

4. Système d'affichage selon l'une quelconque des revendications précédentes, dans lequel le bras pliant (10) comprend une première liaison (11) ayant une première extrémité fixée de manière rotative à la partie de fixation de paroi (41, 45), une seconde liaison (15) ayant une première extrémité fixée de manière rotative au support (51, 55), une seconde extrémité de la seconde liaison (15) étant fixée de manière rotative à une seconde extrémité de la première liaison (11), et un élément de ressort (27) prévu entre les première et seconde extrémités des liaisons (11, 15) dans une région de leur fixation pivotante pour solliciter élastiquement l'unité d'affichage vers la surface.

5. Système d'affichage selon la revendication 4, dans lequel le bras pliant (10) comprend une partie de frottement (20) associée à l'élément de ressort (27) dans la région de la fixation entre les première et seconde liaisons (11, 15) pour résister à la rotation entre les première et seconde liaisons (11, 15).

6. Système d'affichage selon la revendication 5, dans lequel la partie de frottement (20) est configurée de sorte que la force de résistance est plus importante qu'une force élastique de l'élément de ressort (27).

7. Système d'affichage selon la revendication 6, dans lequel l'élément de ressort (27) comprend un ressort de torsion ayant une première extrémité couplée à la première liaison (11) et une seconde extrémité couplée à la seconde liaison (15).

8. Système d'affichage selon la revendication 7, dans lequel la partie de frottement (20) comprend un boulon (21) passant à travers le ressort de torsion (27) dans la région entre le raccordement pivotant des première et seconde liaisons (11, 15), un écrou (23) correspondant au boulon (21) et au moins une rondelle (25) interposée entre le boulon (21) et l'écrou (23).

9. Système d'affichage selon l'une quelconque des revendications précédentes, dans lequel les saillies (5), disposées sur une partie arrière de l'affichage, comprennent chacune une partie de tige (6) faisant saillie à partir de l'arrière du corps principal d'affichage et une partie de tête (7) formée sur une extrémité de la partie de tige (6) et ayant un plus grand diamètre que la partie de tige (6).

10. Système d'affichage selon l'une quelconque des revendications précédentes, dans lequel les supports (51, 55) d'encoche en trou de serrure comprennent chacun en outre un boulon de sécurité (57) pour empêcher le corps principal d'affichage de se détacher des supports (51, 55) d'encoche en trou de serrure en raison d'une force externe et un trou de boulon de sécurité (8) sur lequel le boulon de sécurité (57) est fixé.

11. Gabarit de montage en forme de H pour monter un système d'affichage selon l'une quelconque des revendications précédentes, le gabarit de montage (80) comprenant des moyens de couplage (96) dotés au niveau des extrémités libres (95) de ses bras (91) pour se coupler de manière amovible aux supports (51, 55) d'encoche en trou de serrure, les bras (91) étant priables d'une position opérationnelle à une configuration de stockage, dans laquelle ils sont parallèles à la traverse (81) du gabarit de montage (80).

12. Gabarit de montage en forme de H selon la revendication 11, dans lequel les moyens de couplage (96) comprennent une pluralité de saillies magnétiques (97).

13. Gabarit de montage en forme de H selon les revendications 11 ou 12, comprenant des moyens de blocage (98) pour bloquer les bras pliables (91) dans une position souhaitée.

14. Gabarit de montage en forme de H selon l'une quelconque des revendications 11 à 13, dans lequel l'un parmi les bras (91) et le châssis de gabarit de montage (81) est formé avec une première fente en forme d'arc (83) pour guider la rotation du bras (91) par rapport au châssis de gabarit de montage (81) selon un angle prédéterminé, et l'autre parmi les bras (91) et le châssis de gabarit de montage (81) qui est formé avec une saillie de guidage (93) qui se trouve dans la fente (83).

15. Procédé pour monter un système d'affichage sur une surface comprenant l'étape consistant à fixer au moins un support (51, 55) d'encoche en trou de serrure sur un bras pliant (10), coupler le bras pliant (10) à une partie de fixation de paroi appropriée pour fixer le bras pliant (10) et le support (51, 55) sur la surface et fixer l'affichage sur les supports (51, 55) d'encoche en trou de serrure en insérant des saillies (5) disposées sur une partie arrière de l'unité d'affichage dans les encoches en trou de serrure respectives dans les supports (51, 55) d'encoche en trou de serrure.
